# EUROPEAN PATENT APPLICATION

(11) **EP 4 830 907 A1**
(43) Date of publication of application: **28.10.2026**
(21) Application number: 26174641.6
(22) Date of filing: 27.04.2026
(51) Int. Cl.: B29C 70/46, B29C 65/00, B29C 65/14, B29C 65/78, B29C 69/00, B29D 99/00, B64C 3/18, B64C 3/20, B29C 65/56, B29L 31/30, B64F 5/10

(54) **METHOD FOR MANUFACTURING A THERMOPLASTIC MATRIX COMPOSITE RIB**

(30) Priority: 27.04.2025 FR 2504442
(71) Applicant: Daher Aerospace, 94310 Orly (FR)
(72) Inventor: DENIZE, Martin, 44300 NANTES (FR); CHESNIER, Lucas, 44840 LES SORINIERES (FR); LEMOINE, Ivain, 44330 VALLET (FR)
(74) Representative: Hamann, Jean-Christophe

(57) **Abstract**

A method for manufacturing a rib (300, 310, 320) comprising a Tee-shaped assembly flange and made of a composite material comprising at least one thermoplastic polymer matrix and continuous reinforcing fibers is disclosed, wherein a first preform (201, 301, 305) obtained by stamping of a planar blank and assembled by welding and co-consolidated with a second preform (202, 302, 304, 306) also obtained by stamping of a planar blank.

## Description

### TECHNICAL FIELD

The disclosure belongs to the field of implementation of composite materials with a thermoplastic polymer matrix.

More specifically, the disclosure deals with a method for manufacturing a rib made of a composite material comprising a thermoplastic polymer matrix reinforced by continuous fibers and a spar manufactured by such a method.

### BACKGROUND

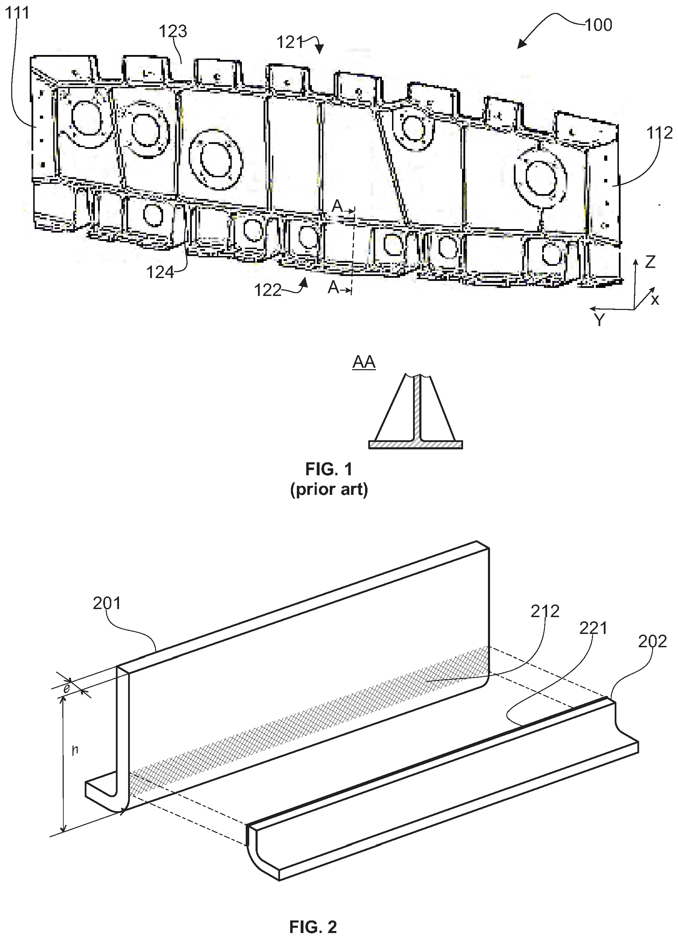

FIG. 1 shows an example of a wing rib (100) for an aircraft made of an aluminum alloy according to prior art.

An aircraft wing may comprise a box frame structure with outer skins on the pressure side and on the suction side of the wing, separated by spars extending according to a length of the wing, i.e. along a Y axis in an aircraft coordinate system.

Ribs extend both between the spars and between the skins, essentially in a XZ plane in the aircraft coordinate system.

The skins may be further stiffened by stringers extending longitudinally, substantially along the Y axis.

An example of a wing rib (100) may comprise two side interfaces, a front interface (111) and a rear interface (112) configured to be attached to spars, respectively a front spar and a rear spar.

The wing rib may also comprise two vertical interfaces, an upper interface (121) and a lower interface (122) configured to be attached to skin panels, respectively on the suction side for the upper interface (121) and on the pressure side for the lower interface (122).

The upper interface (121) and the lower interface (122) may comprise lower recesses (124) and upper recesses (123) enabling the passage of the stringers attached to the skin panels on the suction side and on the pressure side.

The wing ribs may include other recesses for the passage of hydraulic pipes, fuel pipes when it is between the central box and an engine, or of other types of mechanical or electrical control means.

Such a wing rib may be optimized in its shape to ensure the conduction of the various forces to which it may be subjected, while maintaining a minimum weight. Thus, such aluminum alloy making is machined by material removal from a solid forged billet.

At least the lower interface (122) may comprise a flange, as shown in the partial section AA, with a substantially Tee-shaped cross section in this area.

Such a local section, that ensures the continuity of force transmission throughout the section, may be machined in the bulk in the case of a metal constitution.

However, when making such a wing rib out of a composite material, notably with the aim of weight reduction, making such a Tee-shaped cross section may lead to technical difficulties, generating additional costs.

For example, such a composite structure made of a thermosetting matrix composite material may be obtained by resin infusion in a dry fibrous preform.

However, this technology is expensive in tooling and not very productive, especially for applications such as in a single-aisle civil transport aircraft whose production rates may reach 75 or even 100 aircrafts per month.

Thermoplastic polymer matrix composite materials may offer a more productive alternative, particularly by implementing stamping, molding, additive manufacturing or consolidation in shape methods capable of supporting high production rates.

In addition, thermoplastic matrix composite materials are more suitable for recycling as described in document EP 4 410 512 B1.

Document EP 3 210 882 A1 discloses a method for manufacturing a composite rib comprising an assembly flange forming a Tee-shaped cross section with a web.

### SUMMARY

To solve the shortcomings of the prior art, a first objective is to make a composite wing rib with a thermoplastic polymer matrix, comprising a flange and a web forming a Tee-shaped cross section, the flange being integral and in material continuity with the web.

A second objective is to achieve the wing rib by productive and automated methods such as stamping.

A third objective is to achieve a weight reduction greater than 10% compared to a metallic constitution, preferably a weight reduction greater than 20%.

These objectives may be achieved by a method for manufacturing a wing rib comprising an assembly flange forming a Tee-shaped cross section with a web, the wing rib comprising a composite material comprising at least one thermoplastic polymer matrix and continuous reinforcing fibers, the method comprising steps of:
obtaining a first consolidated composite preform comprising a first lamination of fibrous plies comprising continuous fibers and a first matrix comprising a first thermoplastic polymer;
routing the first consolidated composite preform and cutting out at least one first positioning machining;
obtaining a second consolidated composite preform comprising at least two legs extending in intersecting mean directions and comprising reinforcing fibers in a second matrix comprising a second thermoplastic polymer;
routing the second consolidated composite preform and cutting out at least one second positioning machining;
positioning the second consolidated composite preform relative to the first consolidated composite preform by aligning the at least one first positioning machining and the at least one second positioning machining;
heating a first assembly face of the first consolidated composite preform so as to reach a first deconsolidation temperature over a depth comprised between 10% and 20% of a thickness of the first consolidated composite preform underneath the first assembly face;
heating an assembly face of the second consolidated composite preform so as to reach a second deconsolidation temperature over a depth comprised between 10% and 20% of a thickness of the second consolidated composite preform underneath the assembly face of the second consolidated composite preform;
pressing the first assembly face on the assembly face of the second consolidated composite preform so as to weld the second consolidated composite preform on the first consolidated composite preform; and
routing an assembly comprising the first consolidated composite preform and the second consolidated composite preform welded together, to obtain the wing rib.

Thus, the welding of the second preform to the first preform makes it possible to make an assembly comprising a flange forming a Tee-shaped cross section with a web, the web and the flange being integral and in material continuity with the first preform without the addition of additional fixtures and using productive production means, implementing thermoplastic polymer matrix composites.

The method may be implemented according to the embodiments and variants exposed hereafter, which may be considered individually or according to any technically operative combination.

A section of the first preform may comprise at least two legs extending in intersecting mean directions.

A section of the first preform may comprise a web, the first assembly face being comprised on one side of the web, the method comprising steps of:
obtaining a second consolidated composite preform comprising at least two legs extending in intersecting mean directions and comprising reinforcing fibers in a second matrix comprising a second thermoplastic polymer;
routing the second preform and cutting out at least one second positioning machining;
positioning the second preform relative to the first preform by aligning the at least first positioning machining and the at least second positioning machining;
   heating a second assembly face on the web of the first preform opposite the first assembly face so as to reach a first deconsolidation temperature over a depth comprised between 10% and 20% of a thickness of the first preform underneath the second assembly face;
heating an assembly face of the second preform so as to reach a second deconsolidation temperature over a depth comprised between 10% and 20% of a thickness of the second preform underneath the assembly face of the second preform;
pressing the second assembly face of the first preform on the assembly face of the second preform so as to weld together the second preform on the first preform.

The steps of heating the first assembly face and heating the assembly face of the second preform may be carried out simultaneously by interposing at least one infrared lamp between the first assembly face and the assembly face of the second preform.

The first lamination may comprise a ply drop-off to make a thickness variation.

At least one of the steps of obtaining a first preform and obtaining a second preform may include steps of:
assembling a lamination of plies pre-impregnated with a thermoplastic polymer on a mold;
consolidating in shape the lamination on the mold by subjecting the lamination to a pressure - temperature cycle comprising heating the lamination under pressure up to a melting temperature of the thermoplastic polymer and cooling the lamination under pressure, down to a demolding temperature.

The step of assembling a lamination may include automatic fiber placement.

At least one of the steps of obtaining a first preform and obtaining a second preform may include steps of:
obtaining a planar thermoplastic composite blank comprising a main lamination of fibrous plies in a thermoplastic polymer matrix;
heating the planar thermoplastic composite blank to a temperature equal to or greater than a melting temperature of the thermoplastic polymer matrix;
hot-stamping the planar thermoplastic composite blank into a tooling comprising a punch and a stamping die, paired together, wherein walls of the punch and walls of the stamping die are distant from each other by an air gap when the tooling is in a closed configuration to obtain a shaped composite preform; and
consolidating the shaped composite preform in the air gap to obtain a consolidated composite preform.

The step of obtaining a planar composite blank may include obtaining a partially consolidated planar blank by laying up fibers pre-impregnated with a thermoplastic polymer.

In seme embodiments, the stamping die may comprise a recess configured for hosting a patch preform comprising a thermoplastic polymer miscible in the thermoplastic polymer matrix wherein the patch preform contacts the shaped composite preform in the closed configuration and is bound to the consolidated composite preform by co-consolidation when consolidating the shaped composite preform.

In some embodiments, a connection between the at least two legs of the consolidated composite preform comprises an inward fillet on a concave side and an outward fillet on a convex side, the planar composite blank comprising an additional lamination extending over a reduced width and comprised between the outward fillet and the inward fillet of the consolidated composite preform, the additional lamination comprising at least one ply of unidirectional fibers extending parallel to a length of the preform, a radius of the outward fillet is less than a radius of the inward fillet.

The at least one ply of unidirectional fibers may interposed between two plies of the main lamination of fibrous plies.

In addition or alternatively, the at least one ply of unidirectional fibers may be superimposed on the main lamination of fibrous plies, the at least one ply of unidirectional fibers laying on the convex side of the consolidated composite preform.

The wing rib may include boreholes configured as passageways for conduits, wherein the at least one first positioning machining and the at least one second positioning machining correspond to at least one borehole configured as a passageway for a conduit through the wing rib and extending through the first preform and the second preform.

The step of routing the second preform may include routing the assembly face of the second preform in which a routed edge is at a reduced distance from a borehole in the assembly face of the second preform, the reduced distance being less than a radius of the borehole in the assembly face of the second preform.

The routing step of the assembly may include a reboring of at least one borehole extending through the first preform and the second preform.

The first thermoplastic polymer may be selected from PolyEtherEtherKetone (PEEK), PolyEtherKetone (PEK), PolyEtherKetoneKetone (PEKK), Low Melting Point PolyArylEtherKetone (LMPAEK^{®}), PolyEtherimide (PEI) and PolyPhenylene Sulfide (PPS).

The second thermoplastic polymer may be selected from a PolyEtherEtherKetone (PEEK), a PolyEtherKetone (PEK), a PolyEtherKetoneKetone (PEKK), a PolyArylEtherKetone with a low melting point (LMPAEK^{®}), a PolyEtherimide (PEI) and a PolyPhenylene Sulfide (PPS) wherein the second thermoplastic polymer may be miscible in the first thermoplastic polymer and wherein a melting temperature of the first thermoplastic polymer may be greater than or equal to a melting temperature of the second thermoplastic polymer.

### BRIEF DESCRIPTION OF THE DRAWINGS

The method may be implemented according to the nonlimiting embodiments and variants exposed hereafter in reference to FIG. 1 to FIG. 13 in which:
FIG. 1 relating to the prior art shows, shows in a perspective view, an example of a wing rib made of an aluminum alloy by bulk-machining, with a partial section AA defined on this same figure showing an assembly flange forming a Tee-shaped cross section with a web;
FIG. 2 shows, in an exploded view in perspective, some embodiment of a thermoplastic polymer matrix composite wing rib obtained by an assembly of two preforms;
FIG. 3 shows, according to three views in perspective, examples of assemblies of stamped composites preforms for making a wing rib made of a composite material comprising one or more assembly flanges configured in a Tee-shaped cross section with a web;
FIG. 4 represents, in a front view, a right view and a bottom view, an example of a composite wing rib;
FIG. 5 shows according to three sectional views, steps for shaping a planar composite blank by stamping;
FIG. 6 shows according to perspective views, examples of the two preforms of the wing rib of FIG. 4, to facilitate reading the two preforms are not represented at the same scale;
FIG. 7 schematically represents, according to cross-sectional views, steps (7A to 7C) for welding the second preform on the first preform;
FIG. 8 shows, according to sectional views, examples of cross sections of the first preform and of the second preform, for various radius values of their outward fillet;
FIG. 9 shows, according to sectional views, 9A to 9D, examples of outward fillets with reduced radiuses;
FIG. 10 represents in a front view, an example of a wing rib comprising a reinforcement of the assembly by rivets;
FIG. 11 shows a synopsis of some embodiment for integrating a composite patch on a face of a preform;
FIG. 12 shows a flowchart of some implementation of a method for manufacturing preform adapted for making a wing rib made of a composite material; and
FIG. 13 shows an assembly flowchart of some implementation of a method for making a wing rib made of a composite material comprising one or more assembly flanges configured in a Tee-shaped cross section with a web.

### DETAILED DESCRIPTION

FIG. 2, manufacturing a wing rib made of a composite material comprising a thermoplastic polymer matrix, the wing rib comprising at least one assembly flange and a web forming a Tee-shaped cross section, may be performed by assembling a first preform (201) and a second preform (202) whose sections are substantially angles (L-shaped) comprising two legs extending in intersecting mean directions.

Both preforms may be made of a composite material comprising a thermoplastic polymer matrix reinforced by fibers.

For example, the first preform (201) may be reinforced by continuous carbon, glass or aramid fibers, i.e. fibers extending continuously from one edge of the preform to another.

Thus, the first preform (201) may comprise a lamination of plies, obtained by tape laying or fibers placement techniques, the continuous fibers of the plies may be oriented according to the nature of the forces the wing rib is subjected to.

The second preform (202) may, like the first preform, comprise a lamination of plies comprising continuous fibers. Alternatively, the second preform may comprise fibrous reinforcements in the form of long fibers or short fibers and may, in particular, be obtained by plastic injection techniques, more particularly from recycled scraps as disclosed in document EP 4 410 512 B1.

According to some embodiment, the two preforms may be thick preforms, with, in order of magnitude, a minimum thickness (e) of a preform greater than 1% of its height (h), and, depending on the design, a maximum thickness of the preform, greater than the minimum thickness, reaching 5% or more of a height of the preform.

Assembling the first preform (201) with the second preform (202) may be carried out by welding, binding a first assembly face (212) of the first preform (201) and an assembly face (221) of the second preform (202). The assembly face of the second preform is not visible in FIG. 2 but its contour is shown in strong lines, so that, after welding, the second preform (202) is integral and in material continuity with the first preform, the wing rib thus obtained forming only one piece.

Indeed, the welding operation, which, as explained below, involves deconsolidation and reconsolidation of a layer of material extending to a depth of at least 10% of the thickness of each of the preforms from their assembly face, leads, after reconsolidation of a thermally affected area, to a development of the molecular chains of the thermoplastic polymers making the matrices of the preforms, these molecular chains extending from one preform to another through out an assembly interface, ensuring a transfer of forces in depth, particularly to the laminations of plies, without additional fixtures such as rivets or bolts.

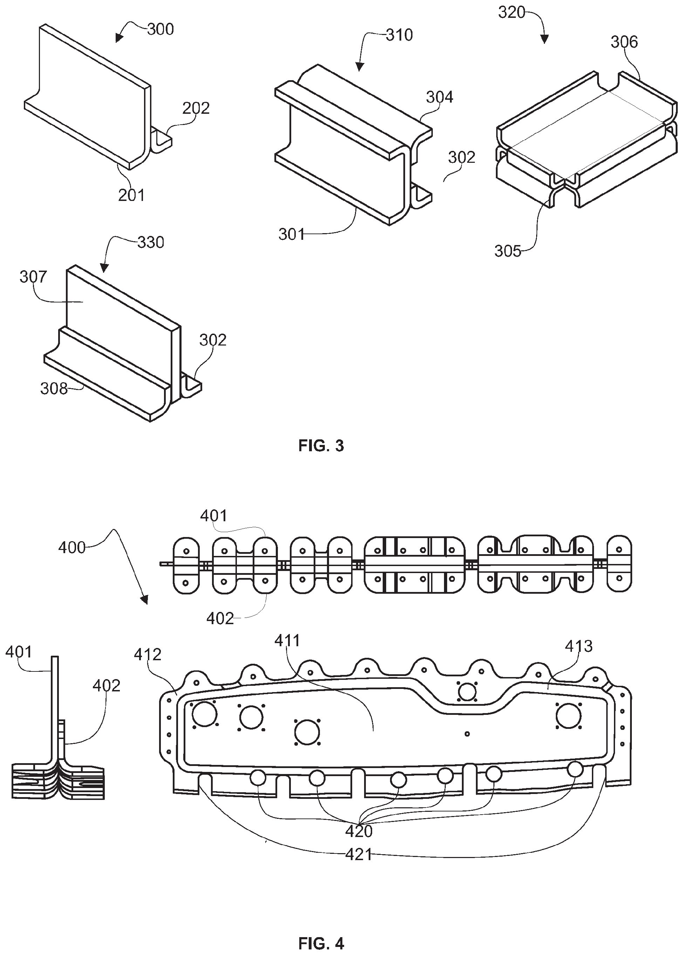

FIG. 3 the illustrative example of FIG. 2 shows that a wing rib (300) made of a thermoplastic matrix composite material and comprising an assembly flange and a web forming a Tee-shaped cross section, may be made according to the present disclosure.

In some other embodiment, an assembly may comprise a first preform (301) with a channel (C-shaped) section assembled back-to-back with a second preform of the same type or with a second preform (302) of an angle section and a third angle preform (304), making a wing rib (310) comprising two assembly flanges with webs forming a Tee-shaped cross section, the wing rib (310) having substantially an I-shaped section.

The first preform (301) may comprise, two upturned parallel legs forming the upper branch and the lower branch of the channel section. The first preform may comprise two upturned nonparallel or perpendicular legs, or even 3 or 4 upturned legs and maybe assembled with one or more second preforms having an angle section, welded vis-a-vis all or part of these upturned legs.

According to some other embodiment, a first preform (305) may comprise 4 upturned legs, and may be assembled with a second preform (306) comprising 4 upturned legs, to make a wing rib (320) that may comprise up to 4 assembly flanges and a web forming a Tee-shaped cross section.

According to some other embodiment (330), a first preform comprising a web (307) may be assembled with a second preform (302) of an angle section and an additional second preform (308) of an angle section each of the two second preforms being welded on an opposite side of the web (307).

The examples described above are nonlimiting and different combinations of first and second preforms welded together may be considered to make a wide variety of rib shapes comprising one or more assembly flanges forming a Tee-shaped cross section with a web.

FIG. 4, a wing rib (400), made of a composite material comprising a thermoplastic polymer matrix reinforced with continuous fibers and configured to replace a wing rib made of an aluminum alloy as shown in FIG. 1, may comprise a first preform (401) and a second preform (402) assembled by welding.

Both preforms may comprise a lamination comprising continuous fibers plies.

Each of these preforms may be obtained by a method selected from consolidation in shape, stamping of a consolidated planar blank and direct stamping of an unconsolidated or partially consolidated planar blank.

In the case of a consolidation in shape, a lamination of pre-impregnated fiber plies may be assembled on a molding face of a tool reproducing the shape to be obtained. Assembling the lamination on the molding face may be performed by tape laying, either automatic or manual, or by automatic fiber placement. The lamination does not need to be consolidated upon layup on the molding face and the plies may be simply assembled by local welds.

The lamination, while laying on the molding face, may be bagged in a tight tarpaulin and subjected to a pressure / temperature cycle to obtain its consolidation. Consolidation may include degassing the lamination, making the thermoplastic polymer impregnating the fibers filling the thickness of the lamination without voids or porosity and keeping even interlaminar distance between plies. Upon completion of the consolidation process, molecular chains of the thermoplastic polymer may grow and cross the plies of the lamination providing interlaminar cohesion of the composite part.

The pressure / temperature cycle may include evacuating a volume comprised between the tight tarpaulin and the molding face where the preform is laying, and/or pressurizing the tight tarpaulin and the underlying preform e.g. in an autoclave.

The lamination of plies may be heated up to a melting temperature of the thermoplastic polymer impregnating the fibers of the plies. Such heating may be performed under pressure, by evacuating a space comprised between the molding face and the tight tarpaulin, and optionally by placing the set comprising the tool, the lamination and the tarpaulin in an autoclave.

The lamination may then be cooled down, still under pressure to a demolding temperature, before demolding the part thus obtained. The demolding temperature may be selected so that the part is rigid enough to be demolded and may be a temperature equal to or below a glass transition temperature of the thermoplastic polymer.

Direct stamping is described in particular in document EP 2 819 834 B1 or U.S. Pat. No. 10 016 931 B2 and may consist in obtaining a planar blank comprising a lamination of plies, partially consolidated, but rigid, by a method of laying up continuous fibers pre-impregnated with a thermoplastic polymer, for instance by automatic fibers placement, configured to obtain a binding of the plies in a stack, the impregnating thermoplastic polymer making the matrix of the composite material, without the molecular chains of the thermoplastic polymer crossing an interface between two plies.

The full consolidation of the composite material may be obtained during a subsequent stamping operation.

Compared to a technical solution using a thermosetting matrix composite, such a blank whether consolidated or partially consolidated is cohesive and may be stored at room temperature without time limit.

Thus, the planar blank corresponding to the first preform and the planar blank corresponding to the second preform may be manufactured on different production lines, according to different manufacturing rates, or even at different production sites. The same applies to the stamping operations of these blanks so that the technical solution using a thermoplastic polymer matrix composite is much more flexible in terms of logistics and flow management compared to a technical solution implementing thermosetting matrix composites.

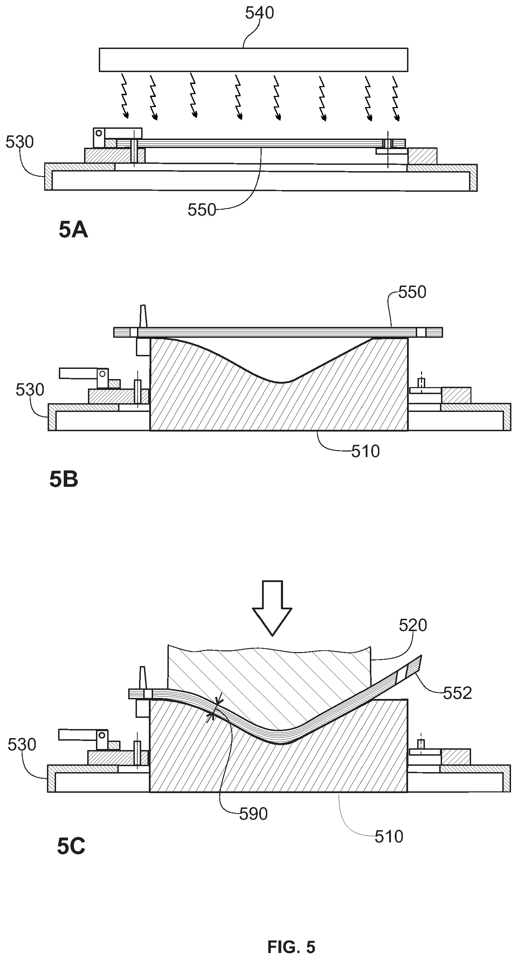

FIG. 5, a planar blank (550) may be placed on a transfer frame (530) as described, for example, in document EP 4 349 560 B1, be heated (5A) to a temperature equal to or greater than a melting temperature of the thermoplastic polymer, for instance using infrared radiant panels (540).

When reaching such a temperature, the planar blank is deconsolidated, i.e. a viscosity of the thermoplastic polymer is low enough to allow interlaminar slippage of the plies in the lamination, thus enabling the shaping of the planar blank into a three-dimensional shape by stamping.

The blank may be hot stamped into a tooling comprising a stamping die (510) and a paired punch (520). The stamping die and the punch may be set on press platens (not shown) enabling the punch (520) to be moved relative to the stamping die, between an open configuration (5B) and a closed configuration (5C).

In the closed configuration (5C), walls of the punch and walls of the stamping die are distant from each other by an air gap (590) which corresponds to a final thickness of the preform after stamping.

Thus, the hot-stamping operation may carry out both the shaping of the planar blank in a shaped preform of a three-dimensional shape, but also a re-compaction, a reconsolidation into shape and a thickness calibration of the finale composite preform, the cooling after hot-stamping being carried out in the tooling while the shaped preform (552) is comprised in the air gap between the punch and the stamping die, subjected to a compaction pressure, down to a demolding temperature at which the tooling is opened and the consolidated composite preform is removed form the mold.

The demolding temperature may be equal to or lower than a glass transition temperature of the polymer making the matrix of the composite material.

An air gap (590) thickness may vary depending on the position along the walls of the punch and the die, especially if the planar blank and the final preform include thickness variations.

After demolding, the consolidated composite preform may be routed by a cutting tool or by an abrasive high-pressure waterjet.

The first preform and the second preform may thus be obtained according to similar method steps, using planar blanks and tooling adapted to the making of each preform.

Back to FIG. 4, the first preform may comprise thickness variations produced during the plies layup using plies drop-off techniques to make staggered laid up zones (413) with a slope of less than 20% (1/5^{th}).

Thus, in a central area (411) of the first preform, the lamination may comprise 32 plies, whereas in a peripheral area (412) of the first preform, corresponding to areas for fixing the rib to an aircraft wing, the lamination may comprise 56 to 64 plies. The staggered laid up zone (413) may connect the two thicknesses along an appropriate slope to enable gradual loading of the whole thickness of the lamination between the central area and the peripheral area.

The walls of the punch and of the stamping die contacting the blank and the shaped piece during stamping, may be machined to account for such thickness variations.

The wing rib (400) may comprise several boreholes configured as passageways through the wing rib for conduits like hydraulic, electrical or fuel ducts. These boreholes may be routed into the preforms by cutting tool or by abrasive high-pressure waterjet.

Some of these boreholes (420) may extend through the first preform (401) and the second preform (402). Therefore, if at least one borehole of these is machined in both preforms prior to welding, this at least one borehole (420) may be used for accurate positioning of the second preform (402) relative to the first preform (401).

Alternatively, other machining extending through the two preforms may be used for this positioning purpose, for example, at least one smooth passage (421), these machining / positioning routings may be carried out on the first preform and on the second preform before the welding assembly.

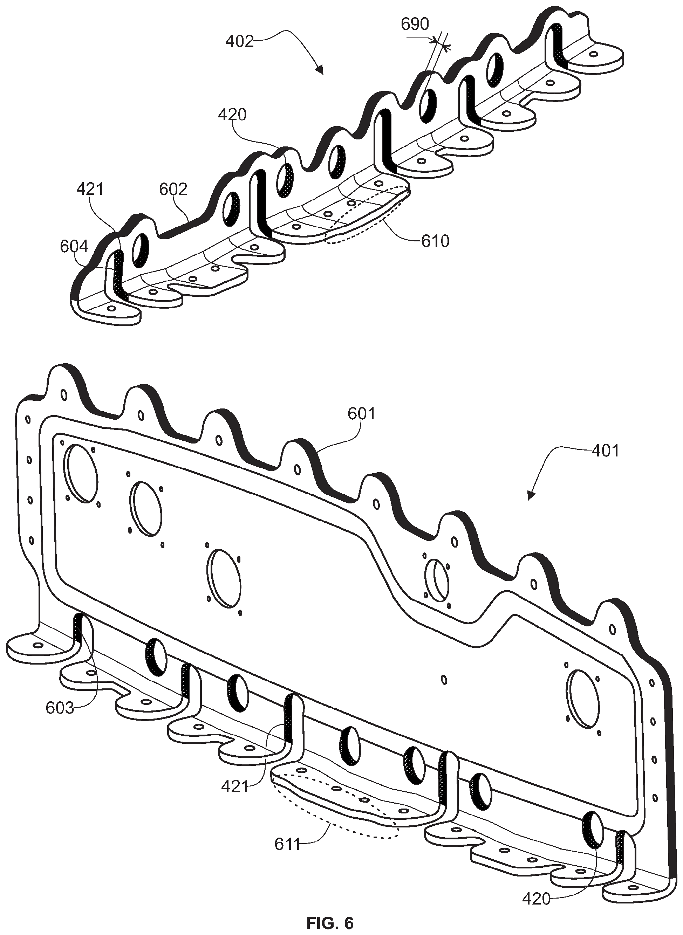

FIG. 6, forming by stamping or consolidation in shape allows, both on the second preform (402) and on the first preform (401), to make joggle areas (610, 611).

Overall, machinings that do not share a common profile (601, 602) between the two preforms and whose edges are shown in thick black in FIG. 6, may be performed before the assembly of the two preforms. Machinings sharing common profiles (603, 604) in the two preforms but which are used for relative positioning of the two preforms during welding, by aligning the common profiles, may be machined prior assembly and re-machined by a finishing pass, for instance reboring, after assembly. These edges are shown filled with a flecked pattern in FIG. 6. The other machinings are carried out after the assembly of the two preforms.

Unlike an assembly by fixtures, such as rivets or bolts, welding assembly may be achieved by leaving a reduced distance (690) between interior and exterior machinings. This reduced distance (690) is less than a radius of the inner machining, which makes it possible to machine the second preform as close as possible to the profile and thus gain weight.

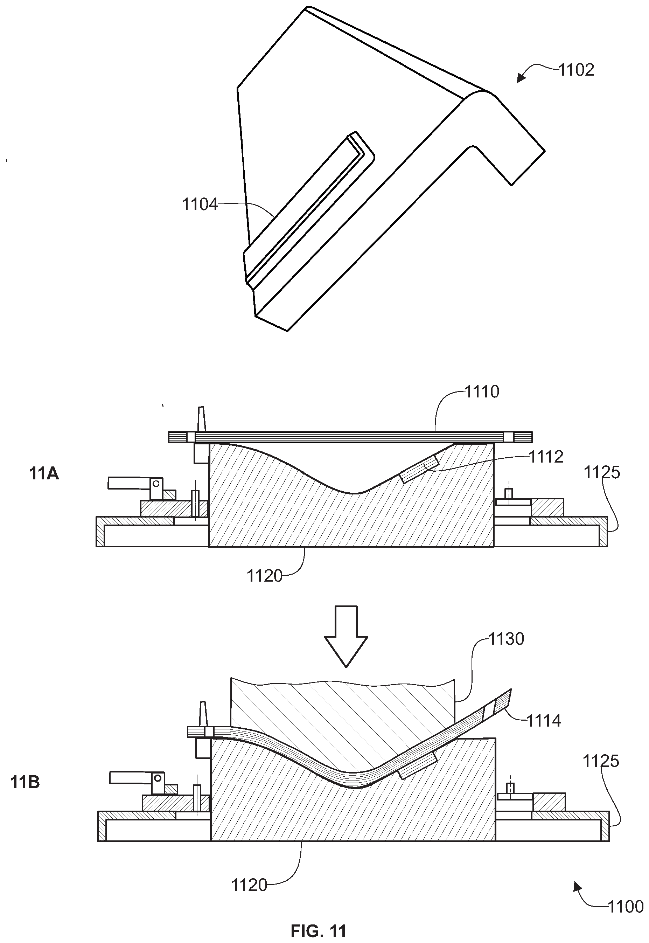

FIG. 11 shows a synopsis (1100) of some embodiment comprising a composite patch (1104) integrated to a face of a preform (1102). The patch may be made of a composite material comprising a thermoplastic polymer matrix reinforced by fibers that may be continuous fibers and/or discontinuous fibers like short fibers or long fibers. In some embodiment the composite patch (1104) may be made from recycled thermoplastic composite material as disclosed in document EP 4 410 512 B1.

In 11A a patch preform (1112) may be integrated by co-consolidation with the preform upon stamping a blank (1110). The blank (1110) may be the same as or similar to the blank (550) shown in FIG. 5 and may comprise a thermoplastic polymer matrix reinforced by continuous fibers.

In 11B the blank (550) may be hot stamped between a punch (1130) and a stamping die (1120) after being heat up to a temperature higher than a melting point of a thermoplastic polymer making the matrix of the blank (1110). The heating may be performed while the blank (1110) is laying on a transfer frame (1125) and is brought under infrared radiant panels. The stamping die (1120) may be the same as or similar to the stamping die (510) of FIG. 5, the punch (1130) may be the same of similar to the punch (520) of FIG. 5 and the transfer frame (1125) may be the same or similar to the transfer frame (530) of FIG. 5.

The patch preform (1112) may be set in a recess machined in the stamping die (1120) prior to stamping and configured to host the patch preform (1112). The patch preform may be fully consolidated or partially consolidated. The thermoplastic polymer making the matrix of the patch preform may be the same than the thermoplastic polymer making the matrix of the blank (1110) or may be a thermoplastic polymer miscible in the thermoplastic polymer making the matrix of the blank (1110).

During the stamping operation, the patch preform (1112) may contact under pressure the shaped preform (1114), the shaped preform (1114) may transfer heat fo the patch preform (1112) which may be co-consolidated with the shaped preform (1114) making a preform (1102) comprising an integrated composite patch (1104).

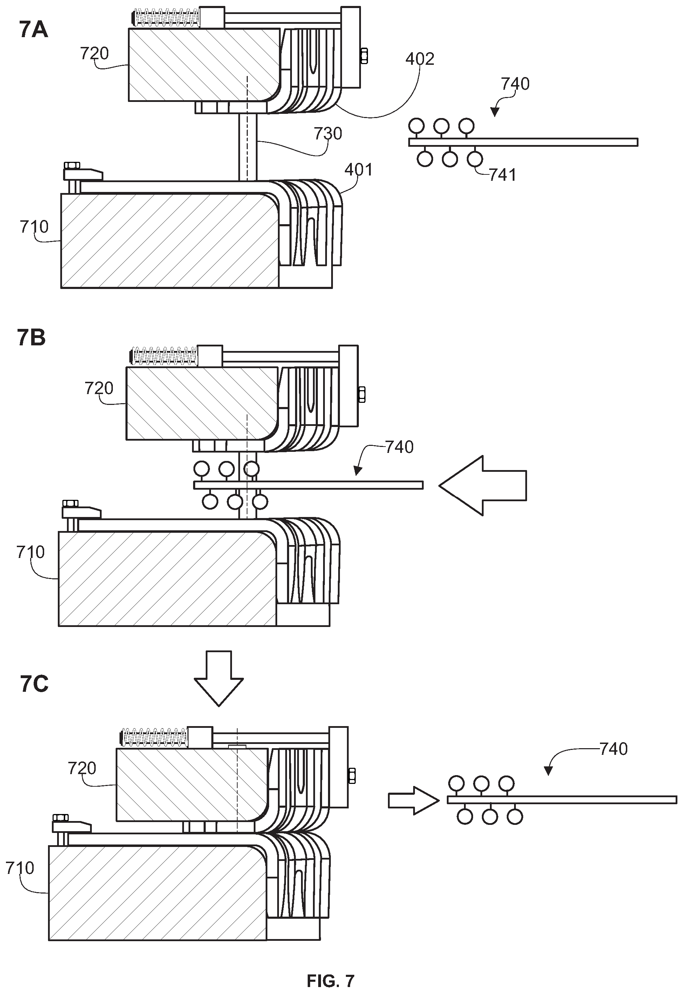

FIG. 7, different welding methods may be used for the welding assembly, however in the case of a wing rib whose thicknesses at the assembly surfaces are of the order of 10 mm or more, welding with infrared heating, the principle of which is described in document WO 2023/209209 A1 may be selected.

In addition, welding with infrared heating has the advantage of contactless heating, reducing the risk of pollution of the assembly interface.

The first preform (401) may be maintained on an anvil (710) and the second preform (402) may be placed in a holding jig (720) configured to be moved relative to the anvil.

The first preform (401) and the second preform (402) may be positioned relative to each other, in particular by a pin (730) crossing the two preforms. Initially (7A) the two preforms may be kept distant from each other.

The heating of assembly surfaces (7B) may be carried out by a retractable heating device (740) which may comprise a plurality of infrared lamps (741) that may be introduced between the first preform (401) and the second preform (402), thus enabling to heat the assembly face of the first preform and the assembly face of the second preform simultaneously.

The heating may be carried out so that each preform is deconsolidated over a depth comprised between 10% and 20% of its thickness under its respective assembly surfaces. Thus, for a thickness of around 50 plies, a deconsolidation over a depth of 5 to 10 plies is targeted. Heating conditions to achieve such a result may be found by simulation and refined by tests.

The welding may be carried out (7C) by quickly retracting the retractable heating device (740), bringing the holding jig (720) and the anvil (710) closer together and pressing the assembly face of the first preform against the assembly face of the second preform.

The pressure is held for a sufficient time to ensure the reconsolidation of the thermally affected layers.

The thermoplastic polymers making the matrix of the first preform and the matrix of the second preform may be the same.

For aeronautical applications these are selected among high performance polymers such as PolyEtherimide (PEI) or a PolyArylEtherKetone family polymer such as PolyEtherEtherKetone (PEEK), PolyEtherKetone (PEK), PolyEtherKetoneKetone (PEKK), Low Melting Point PolyArylEtherKetone (LMPAEK ^{®}) and PolyPhenylene Sulfide (PPS).

LMPAEK^{®} is a registered trademark of VICTREX PLC - Victrex Technology Centre Hillhouse International, Thornton FY5 4QD, United Kingdom.

The two thermoplastic polymers may be different when they are miscible in each other at the heating temperature of the weld and the temperature and heating time allow deconsolidation over a depth comprised between 10% and 20% of the thickness of the preforms under the assembly surfaces.

Table 1 gives examples of combinations of thermoplastic polymers for aeronautical applications and an indicative heating temperature for welding which may be adjusted and confirmed by tests.

**Table 1:**

| First polymer | Second polymer | Indicative welding temperature [°C] |
|---|---|---|
| PEEK | LMPAEK ^{®} | 310°C |
| PEKK | LMPAEK ^{®} | 350°C |
| PEEK | PEI | 310°C |
| PEKK | PEI | 350°C |
| LMPAEK ^{®} | PEI | 280°C |

Two legs of the first preform or of the second preform may be connected by an inward fillet (830) on a concave side and by an outward fillet (840) on a convex side of the two legs thus connected.

If the radius of the inward fillet (830) is *r₁*, without particular arrangement of the planar blank and according to the prior art, the radius of the outward fillet may be *r₂* with:
Math 1: ${r}_{2} = {r}_{1} + e$

With e being a thickness of the connected legs.

The above applies both to the first preform (201) and to the second preform (202) and implies, after assembly, a wedge-shaped opening in the Tee-shaped section of the assembled legs / webs

This wedge opening may have drawbacks depending on the application:
During assembly, it may be difficult to exert pressure in the thickness of the material located between the outward fillet and the inward fillet, because it does not face an opposable support. As a result, this portion may not reconsolidate properly during welding and may have a porosity content higher than the rest of the rib.

After assembly, this opening promotes the initiation of peeling and crack opening progression phenomena tending to separate the first preform from the second preform.

When a compression force is directed towards this area it gives rise to a bending torque which tends, on the one hand, to separate the two preforms by peeling and crack progression or may initiate lateral buckling instability phenomena.

According to prior art, implementing preforms with a thermosetting polymer matrix, it is customary to add in this area a filling piece (812) commonly referred to as a "noodle".

This solution of the prior art is not economically compatible with a method implementing stamped and welded preforms whose matrices are thermoplastic polymers, in addition, this filling piece (812) does not carry load.

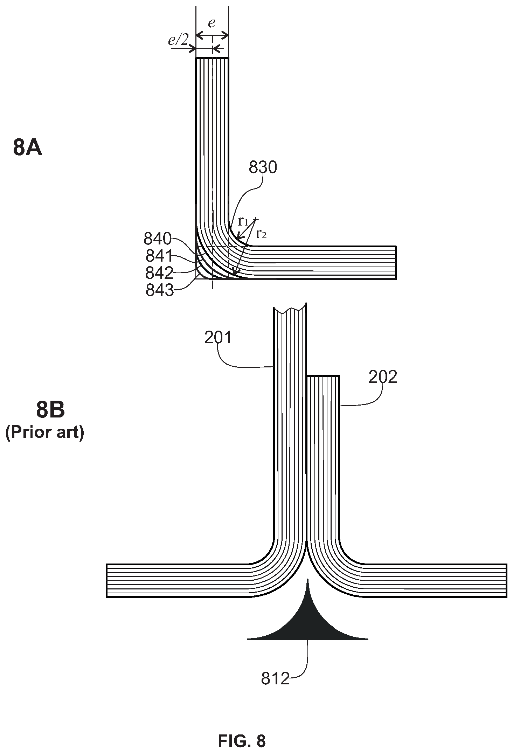

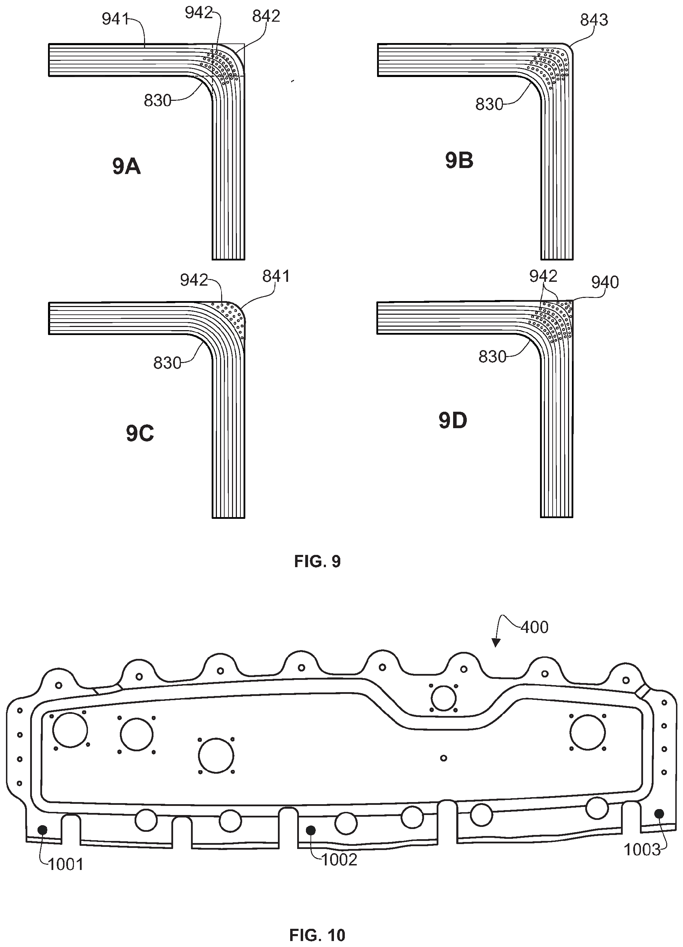

FIG. 9, a radius of the outward fillet may be reduced by adding to the lamination (941) making the planar blank, an additional lamination of reduced width at the future connection area between the legs. This additional lamination may consist of unidirectional fiber plies (942), extending along a length of the preform that is to say in a direction substantially perpendicular to the cross-sections shown in FIG. 8 and in FIG. 9.

According to some embodiment 9A, the additional lamination may consist of unidirectional fiber plies (942) interposed between plies of the first lamination (941). This embodiment makes it possible to reach an outward fillet radius (842) less than the thickness e of the legs or even a radius (843) less than half a thickness e/2 of the legs. When the legs are of different thicknesses, e refers to the thickness of the leg having the greatest thickness.

According to some other embodiment, 9C, the additional lamination of unidirectional fiber plies (942) may be superimposed on the first lamination on the convex side. This embodiment makes it easy to reach an outward fillet radius (841) lower or even much lower than an inward fillet radius (830).

According to some other embodiment, 9D, combining the two preceding embodiments, the additional lamination may comprise plies of unidirectional fibers interposed between plies and superimposed on the lamination.

The latter makes it possible to obtain an outward fillet (940) close to a sharp edge with a radius of less than 1 mm, or even less than 0.5 mm.

A lower outward fillet improves the assembly resistance to phenomena like peeling and crack opening.

An outward fillet radius smaller than the inward fillet radius may limit or even eliminate the risk of deformation of the area comprised between the outward fillet and the inward fillet.

An outward fillet with a radius smaller than half a thickness, limits or avoids the risk of lateral buckling instability under load.

The additional lamination is integral with the preform, this additional lamination being laid up during the manufacturing of the planar blank at the same time as the first lamination and being stamped and consolidated with the first lamination. Thus, the area comprised between the inward fillet and the outward fillet and comprising the additional lamination may bear and transmit loads.

The implementation of these embodiments is described in co-pending application FR 2504441.

FIG. 10 according to some embodiment rivet-type fasteners (1001, 1002, 1003) extending between the two preforms may be installed in locations determined by calculation so as to counteract any crack propagation tending to separate the welded preforms from each other.

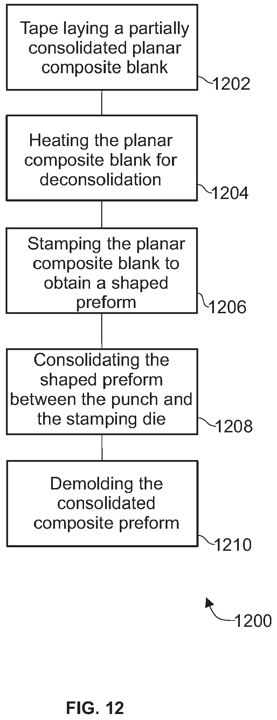

FIG. 12 according to some implementation a flowchart (1200) of method for manufacturing a composite preform for making part of a wing rib made of a composite material may comprise a lamination step (1202), a preheating step (1204), a stamping step (1206), a consolidation step (1208) and a demolding step (1210).

The composite preform manufactured according to the flowchart (1200) may be the same or similar to the composite preforms (201, 202, 301, 302, 304, 305, 306, 308, 401, 402, 1102) disclosed herein. The latter may comprise a main lamination of fibrous plies (941) and may optionally comprise an additional lamination of unidirectional fibers (942) of reduced width for making an outward fillet (841, 843, 940) with an acute radius.

In the lamination step (1202) a substantially planar composite blank may be obtained by manual or automatic tape laying or by automatic fibers placement the planar composite blank comprising a main lamination of fibrous plies comprising continuous fibers pre-impregnated with a thermoplastic polymer, extending over a full width of the blank. The plana blank may be the same as or similar to the blanks (550, 1110) disclosed herein and may comprise an additional lamination of reduced width for making an outward fillet and/or plies drops-off for making thickness variations. The blank thus obtained may be fully consolidated or may be unconsolidated or partially consolidated for reducing lead times and increasing manufacturing rates. For partial a partial consolidation, the fiber layup conditions in terms of speeds, temperature and pressure are adjusted in order to obtain plies adhesion to one another without consolidation of the lamination.

In the preheating step (1204) the planar blank may be heated to a temperature close or higher than a melting point of the thermoplastic polymer making the matrix of the blank. The temperature may be high enough and even over the area of the blank subsequently subjected to shaping, to enable interlaminar slippage of fibers and avoid pinning points between plies. Such heating results in a deconsolidation of the blank even if it was pre-consolidated. The preheating step (1204) may be the same as or similar to depicted in 5A using infrared radiant panels (540) and carrying the blank on a transfer frame (530).

In the stamping step (1206) the pre-heated blank may be shaped by stamping between a punch and a stamping die. The stamping operation may be the same as or similar to depicted in 5C and 11B and comprises moving the punch toward the stamping die from an open configuration to a closed configuration, thus pushing the hot and deconsolidated planar blank (550, 1110) by the punch (520, 1130) against the stamping die (510, 1120), the shaped preform (552, 1114) being comprised in an air gap of calibrated thickness (590) between walls of the punch and walls of the stamping die.

The shaped preform may comprise joggles similar to joggles (610, 611) disclosed herein as well as one or more composite patch (1112) as disclosed in FIG. 11.

In the consolidation step (1208) the shaped preform (552, 1114) may be cooled down between the punch and the stamping die while comprised in the air gap of calibrated thickness. Being held under pressure in the air gap, gases and voids in the deconsolidated lamination are evacuated or closed. The molten thermoplastic polymer may condensate to a solid crystallized or amorphous state under pressure, making the molecular chains of the polymer developing and extending in the thickness of the preform through the interlaminar interfaces.

In the demolding step (1210), the punch may be moved apart from the stamping die to an open configuration of the tooling, and the consolidated composite perform may be removed from the tooling. The demolding step is carried out after a dwell time spent by the shaped preform in the air gap and when the preform was cooled to a temperature low enough to ensure proper consolidation. Such time and temperature may be set after preliminary tests.

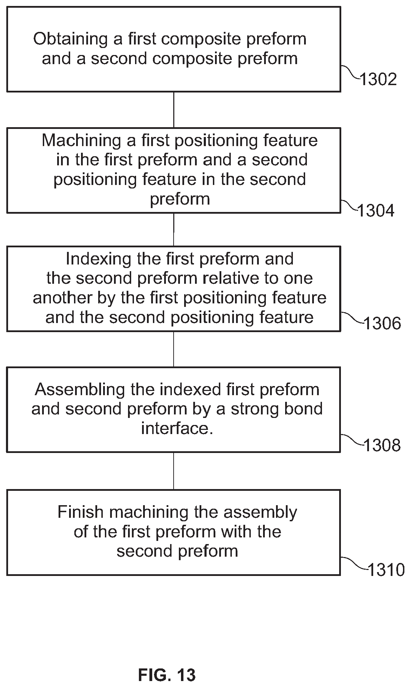

FIG. 13 shows an assembly flowchart (1300) of a method for making a wing rib made of a composite material and comprising a Tee-shaped flange according to techniques disclosed herein. The assembly flowchart may comprise a step of obtaining preforms (1302), a step of machining the preforms (1304), a step of indexing the preforms (1306), a step of assembling the preforms (1308) and a step of finishing the preforms assembly (1310).

The wing rib may be the same as or similar to the ribs (300, 310, 320, 330, 400) disclosed herein, preforms may be the same as or similar to the to the composite preforms (201, 202, 301, 302, 304, 305, 306, 308, 401, 402, 1102) disclosed herein and may be made of a composite material comprising a thermoplastic polymer matrix and a fibrous plies lamination comprising continuous fibers.

In a step of obtaining preforms (1302) at least two composite preforms, each comprising at least two legs extending in intersecting mean directions, may be obtained according to a method as disclosed in flowchart (1200) herein.

In a step of machining the preforms (1304) a first positioning feature may be machined in the first preform and a second positioning feature may be machined in the second preform. Machining may be performed by technics like route milling, high pressure waterjet cutting or laser cutting and may comprise cut-out shapes sharing a common profile in the two preforms. Positioning features may be the same as or similar to machinings (603, 604) disclosed herein.

In a step of indexing the preforms (1306) the first preform may be properly align with the second preform using the positioning features for indexing. Such alignment may be kept during the subsequent assembly step. Indexing may be performed by a specific means, like a pin (730) as disclosed in FIG. 7, extending between the two preforms and indexing the positioning features relative to one another.

Ina step of assembling the preforms (1306) the two preform may be bound to one another by a strong bon over a common interface, implementing technics involving a deconsolidation and a reconsolidation of the composite laminations of both preforms over a significant thickness on each side of the common interface. Such a strong bond maybe obtained by welding technics similar to the techniques disclosed FIG. 7 herein, but also with other welding techniques such as deep ultrasonic welding or induction welding. Other bonding methods such as co-consolidation may also be implemented.

In a step of finishing the preforms assembly (1310) the assembly comprising the first preform and the second preform strongly bond together over a significant thickness so that the second preform is now integral and in material continuity with the first preform, may be machined for making its final contour and dimension.

### Examples

### Example 1: Weight saving

The wing rib (400) made of a composite material shown in FIG. 4 may replace the wing rib (100) made of an aluminum alloy shown FIG 1 with a same load carrying capacity.

The mass of the wing rib (100) made of aluminum alloy is 11.8 kg.

The mass of the wing rib (400) made of LMPAEK ^{®} thermoplastic matrix composite reinforced with 70% carbon fibers and assembled by welding implementing the method described above is 8.8 kg, leading to a 25% weight saving compared to the metallic solution.

For comparison, the mass of a wing rib made of a thermoplastic matrix LMPAEK^{®} composite reinforced by 70% carbon fibers but where the two preforms are assembled by rivet-type fixtures is 10.6 kg, leading to a weight saving of only 10% compared to the bulk-machined metallic solution.

Thus, the implementation of the methods described makes it possible to more than double the weight saving conferred by the use of composite material.

### Example 2: Productivity gain

The wing rib shown in FIG. 4 may be made with the same composite material with, according to a first assembling method of the first and second preform, known from the prior art, by riveting. The total manufacturing time is 8.5 hours.

The same assembly may be carried out by implementing the methods described, the total manufacturing time is then 6.3 hours, leading to a 24% gain.

## Claims

1. A method for manufacturing a wing rib (310, 320, 330, 400) comprising an assembly flange forming a Tee-shaped cross section with a web, the wing rib comprising a composite material comprising at least one thermoplastic polymer matrix and continuous reinforcing fibers, the method comprising steps of:
obtaining (1302) a first consolidated composite preform and a second consolidated composite preform, the first consolidated composite preform (201, 301, 305, 401) comprising a first lamination of fibrous plies comprising continuous fibers and a first matrix comprising a first thermoplastic polymer, the second consolidated composite preform (202, 302, 304, 306, 402) comprising at least two legs extending in intersecting mean directions and comprising reinforcing fibers in a second matrix comprising a second thermoplastic polymer;
machining (1304) in the first consolidated composite preform at least one first positioning feature and in the second consolidated composite preform at least one second positioning feature;
indexing the second consolidated composite preform relative to the first consolidated composite preform (1306) by aligning the at least one first positioning feature (603) and the at least one second positioning feature (604);
assembling the indexed first consolidated composite preform and the second consolitated conpositepreform (138) by heating a first assembly face (212) of the first consolidated composite preform, so as to reach a first deconsolidation temperature, and heating an assembly face (221) of the second consolidated composite preform so as to reach a second deconsolidation temperature, the first and the second deconsolidation temperatures being reached in each of the first consolidated composite preform and the second consolidated composite preform over depths underneath the first assembly face and the second assembly comprised between 10% and 20% of a thickness of a consolidated composite preform;
pressing the first assembly face (212) on the assembly face (221) of the second consolidated composite preform so as to weld the second consolidated composite preform on the first consolidated composite preform; and
finish machining (1310) an assembly comprising the first consolidated composite preform (201, 301, 305, 401) and the second consolidated composite preform (202, 302, 304, 306, 402) welded together, to obtain the wing rib (310, 320, 330, 400).

2. The method of claim 1, wherein a section of the first consolidated composite preform comprises at least two legs extending in intersecting mean directions.

3. The method of claim 1, wherein a section of the first consolidated composite preform comprises a web (307), the first assembly face being comprised on a side of the web, the method comprising steps of:
obtaining an additional second consolidated composite preform (308) comprising at least two legs extending in intersecting mean directions and comprising reinforcing fibers in a second matrix comprising the second thermoplastic polymer;
routing the additional second consolidated composite preform and cutting out at least one third positioning machining;
positioning the additional second consolidated composite preform relative to the first consolidated composite preform by aligning the at least one first positioning feature and the at least one third positioning machining;
heating a second assembly face on the web of the first consolidated composite preform opposite the first assembly face so as to reach a first deconsolidation temperature over a depth comprised between 10% and 20% of the thickness of the first consolidated composite preform underneath the second assembly face;
heating an assembly face of the additional second consolidated composite preform so as to reach a second deconsolidation temperature over a depth comprised between 10% and 20% of a thickness of the additional second consolidated composite preform underneath the assembly face of the additional second consolidated composite preform; and
pressing the second assembly face of the first consolidated composite preform on the assembly face of the additional second consolidated composite preform so as to weld together the additional second consolidated composite preform on the first consolidated composite preform.

4. The method of claim 1, wherein the steps of heating the first assembly face (212) and heating the assembly face (221) of the second consolidated composite preform are carried out simultaneously by interposing at least one infrared lamp (741) between the first assembly face (212) and the assembly face (221) of the second consolidated composite preform.

5. The method of claim 1, wherein the first lamination comprises plies drops-off (413) to make a thickness variation.

6. The method of claim 1, wherein at least one of the steps of obtaining a first consolidated composite preform and obtaining a second consolidated composite preform (1302) comprises steps of:
assembling a lamination of plies pre-impregnated with a thermoplastic polymer on a mold; and
consolidating in shape the lamination of plies on the mold by subjecting the lamination of plies to a pressure - temperature cycle comprising heating the lamination of plies under pressure up to a melting temperature of the thermoplastic polymer and cooling the lamination of plies under pressure down to a demolding temperature.

7. The method of claim 6, wherein a step of assembling a lamination comprises laying up fibers by automatic fibers placement.

8. The method of claim 2, wherein at least one of the steps of obtaining a first consolidated composite preform and obtaining a second consolidated composite preform (1302) comprises steps of:
obtaining a planar thermoplastic composite blank (1202) comprising a main lamination of fibrous plies in a thermoplastic polymer matrix;
heating the planar thermoplastic composite blank (1204)to a temperature equal to or greater than a melting temperature of the thermoplastic polymer matrix;
hot-stamping the planar thermoplastic composite blank (1206) into a tooling comprising a punch (520) and a stamping die (510), paired together, wherein walls of the punch and walls of the stamping die are distant from each other by an air gap (590) when the tooling is in a closed configuration to obtain a shaped composite preform; and
consolidating the shaped composite preform (1208) in the air gap (512) to obtain a consolidated composite preform.

9. The method of claim 8, wherein a step of obtaining a planar thermoplastic composite blank (1202) comprises obtaining a partially consolidated planar blank by laying up fibers pre-impregnated with a thermoplastic polymer.

10. The method of claim 8, wherein the stamping die comprises a recess configured to host a patch preform (1112) comprising a thermoplastic polymer miscible in the thermoplastic polymer matrix wherein the patch preform contacts the shaped composite preform (1114) in the closed configuration and is bound to the consolidated composite preform by co-consolidation when consolidating the shaped composite preform.

11. The method of claim 8, wherein a connection between the at least two legs of the consolidated composite preform comprises an inward fillet (830) on a concave side and an outward fillet (840, 841, 842, 843) on a convex side, the planar thermoplastic composite blank comprising an additional lamination (942) extending over a reduced width and comprised between the outward fillet and the inward fillet of the consolidated composite preform, the additional lamination comprising at least one ply of unidirectional fibers extending parallel to a length of the consolidated composite preform wherein a radius of the outward fillet (841, 843) is less than a radius of the inward fillet.

12. The method of claim 11, wherein the at least one ply of unidirectional fibers is interposed between two plies of the main lamination of fibrous plies, or superimposed on the main lamination of fibrous plies on the convex side of the consolidated composite preform.

13. The method of claim 1, wherein the wing rib comprises boreholes (420) configured as passageways of conduits, wherein the at least one first positioning feature and the at least one second positioning feature correspond to at least one borehole (420) configured as a passageway of a conduit through the wing rib and extending through the first consolidated composite preform (401) and the second consolidated composite preform (402) and wherein the step of finish machining (1310) the assembly comprises a reboring of at least one borehole (420) extending through the first consolidated composite preform (401) and the second consolidated composite preform (402).

14. The method of claim 13, wherein a step of machining the second consolidated composite preform comprises routing the assembly face of the second consolidated composite preform (402) in which a routed edge (602) is at a reduced distance (690) from a borehole in the assembly face of the seconde consolidated composite preform, the reduced distance (690) being less than a radius of the borehole (420) in the assembly face of the second consolidated composite preform (402).

15. The method of claim 1, wherein the first thermoplastic polymer is selected among a PolyEtherEtherKetone (PEEK), a PolyEtherKetone (PEK), a PolyEtherKetoneKetone (PEKK), a PolyArylEtherKetone with a low melting point (LMPAEK^{®}), a PolyEtherimide (PEI) and a PolyPhenylene Sulfide (PPS) and the second thermoplastic polymer is selected among a PolyEtherEtherKetone (PEEK), a PolyEtherKetone (PEK), a PolyEtherKetoneKetone (PEKK), a PolyArylEtherKetone with a low melting point (LMPAEK^{®}), a PolyEtherimide (PEI) and a PolyPhenylene Sulfide (PPS) and wherein the second thermoplastic polymer is miscible in the first thermoplastic polymer, a melting temperature of the first thermoplastic polymer being greater than or equal to a melting temperature of the second thermoplastic polymer.
